Europäisches Patentamt
European Patent Office
Office européen des brevets

Publication number: 0 284 950 A1

# EUROPEAN PATENT APPLICATION

Application number: 88104532.2

Int. Cl.[4]: C03C 25/02 , C03C 17/22

Date of filing: 22.03.88

Priority: 30.03.87 US 31817

Date of publication of application: 05.10.88 Bulletin 88/40

Designated Contracting States: BE CH DE FR GB IT LI NL

Applicant: PPG INDUSTRIES, INC.
One PPG Place
Pittsburgh Pennsylvania 15272(US)

Inventor: Klett, Michael Walter
9499 Peebles Road
Allison Park Pennsylania 15101(US)
Inventor: Das, Balbhadra
8005 Lingay Drive
Allison Park Pennsylvania 15101(US)

Representative: Sternagel, Hans-Günther, Dr. et al
Patentanwälte Dr. Michael Hann Dr. H.-G. Sternagel Sander Aue 30
D-5060 Bergisch Gladbach 2(DE)

## Method of increasing heat resistance of glass and the heat resistant glass so produced.

The production of heat and temperature resistant glass fibers having nonrefractory inorganic oxides in addition to silica results from forming the glass shapes and treating them with a phosphorus-containing compound. The glass shapes are formed from silicate systems having at least one nonrefractory inorganic oxide and optionally having other inorganic oxide glass formers than silica and treating the shapes with the phosphorus-containing compound to form a coating of the compound on the glass shape. The heat and temperature resistant glass shape has a softening point greater than the softening point of the untreated glass shape.

EP 0 284 950 A1

Xerox Copy Centre

# METHOD OF INCREASING HEAT RESISTANCE OF GLASS AND THE HEAT RESISTANT GLASS SO PRODUCED

The present invention is directed to a method of increasing the heat or thermal resistance of glass shapes having nonrefractory metal oxide components.

High temperature resistant inorganic oxide shapes like silica fibers have use temperatures in some instance approaching 3,000°F (approximately 1650°C). The pure silica fibers have a softening point equivalent to pure silica that is between 2900 and 3000°F (1593-1649°C). Also shapes such as fibers or beads comprised of greater than 95% silica and combinations of silica and one or more refractory metal oxides are useful in producing high temperature resistant shapes and fibers.

A process for producing pure silica shapes involves melting pure silica at its substantially high softening point. This involves a rather large expense of energy. Forming the 96% silica shapes usually involves leaching a precursor shape having a lower concentration of silica and to remove a large portion of the nonsiliceous materials, and condensing the resultant 96% silica shape at temperatures lower than the melting point of silica. Processes of forming shapes comprised of silica and a refractory metal oxide also involve melting these materials at the same temperature at which the material as a shape would melt; therefore, involving a large expense of energy. Utilizing components that reduce the melting point in the composition of silica and silica and refractory metal oxide results in the production of shapes containing those components. Such components could subsequently be leached from the shapes, but such leaching may remove some of the refractory metal oxides. Also some of the aforementioned compositions are difficult to process into shapes. This is because of their high melting temperature, rapid rate of solidification and narrow temperature ranges in which their melts remain at the proper forming conditions. Hence, shapes made of the aforementioned components tend to be expensive because of the large energy requirements for melting and forming and the precision controlled forming process conditions.

On the other hand, the more easily formed glass like fibers, beads, sheets, plates, tubes and the like are less expensive but they have a limited maximum use temperature. For instance, glass fibers having "E-glass" or "621-glass" compositions have softening points below around 650°C (1200°F). Hence, these materials are not suitable for use in fabrics, yarns, strands, fibers, mats, and blankets requiring no melting or sintering at temperatures above 650°C or no excessive shrinkage above 650°C. These are basic requirements in applications such as: certain fiber insulation; bulk, mat or blanket insulation; insulations for catalytic converters; and woven, nonwoven fabrics, yarns and fibers and strands for gasket material for furnaces, kilns, and the like.

## Summary of the Invention

The present invention is a method of forming a heat and/or temperature resistant glass shape through treatment with a phosphorus-containing compound. The glass shape is formed by melting an effective glass batch composition to result in the glass having a composition of at least a minor amount of silica and non-refractory metal oxides and/or fluxes which are present from components in the batch usually to lower the melting point of the silica. Nonexclusive examples include the following glass systems: alkali silicates, soda-lime silicates, borosilicates, alkali metal borosilicates, alkali metal-alkaline earth metal borosilicates, and alumina borosilicates, and the like. The shape is cooled sufficiently to allow application of the phosphorus-containing compound in at least an effective coating amount. The coating can be formed by any film desposition technique such as solvent or carrier evaporation, curing chemical reactions of organic or inorganic film forming materials, chemical interaction of coupling agents on the glass surface and vapor deposition where such techniques utilize phosphorus-containing compounds. The effective coating amount is an amount greater than that necessary to form a molecular monolayer of the coating or film on the surface of the glass. The heat or temperature resistant glass shapes produced by the method have an increased resistance to heat or temperature over the glass shapes not having the phosphorus-containing compound.

Brief Description of the Drawings

Figure 1 is a differential thermal analysis curve of glass fiber strands used as a control, where the strands are available from PPG Industries, Inc. under the trade designation G-75 610 strand and yarn.

Figure 2 is a differential thermal analysis curve conducted in the same manner and on the same equipment as that for Figure 1 of G-75 glass fiber strands treated with a phosphorus-containing organic condensate.

Detailed Description of the Invention and Preferred Embodiment

The glass shapes of the present invention include: fibers; strands; bundles of fibers, whether continuous or staple; beads; tubes; capillaries; particles; sheets; and flat glass and the like. Formation of the shapes is through any melting process including fining and conditioning known to those skilled in the art.

The shapes have glass compositions that are multicomponent silicate systems produced from batch raw materials known to those skilled in the art. The melting point of the batch composition is lower than a silica batch composition for forming pure silica shapes. Silica can be present in the shapes in an amount ranging from at least a minor amount of the glass in the presence of other inorganic oxide glass formers to an amount as the major component of the glass and the only glass former. Other glass formers that can be present include those known by people skilled in the art as complying with Zachariasen's rules (Journal of American Chemical Society, Vol. 54, 3841, 1932) and/or Stanworth's Criteria (Journal of American Ceramic Society, Vol. 54, 61 1971). Nonexclusive examples include: in the multicomponent silicate glass systems, such glass formers as $SiO_2$, $B_2O_3$, $GeO_2$, $P_2O_5$, $AS_2O_3$, $Sb_2O_3$, $IN_2O_3$, $Tl_2O_3$, $SNO_2$, $PBO_2$, $SeO_2$, $TeO_2$, $SeO_2$, $MoO_3$, $Wo_3$, $Bi_2O_3$, $Al_2O_3$, $Ba_2O_3$, $V_2O_5$, $So_3$. Also present with the one or more glass forming oxides is at least one glass flux from the following group: alkali metal oxide ($R_2O$) or boric oxide, and an oxide of one or more of the following metals: berylium, magnesium, calcium, zinc, strontium, cadmium, barium, aluminum, titanium, zirconium, and thorium. A particularly suitable glass composition for forming fibers is any fiberizable silicate glass composition examples of which include alkali metal, alkaline earth metal alumina borosilicate glass compositions having low amounts of alkali metal oxides known to those skilled in the art as "E-glass" and a variation thereof known as "621-glass" compositions. Included with these compositions are any of their more environmentally acceptable derivatives. These glass compositions in the shapes are prepared in the conventional manner by blending the raw materials used to supply the specific oxides. For instance, sand is used for $SiO_2$; clay for $Al_2O_3$; lime or limestone for CaO; dolomite for MgO and CaO; and the like. All the ingredients are mixed in proper quantities to provide the desired weight of each constituent for the desired glass. A suitable method for forming fibers from the fiberizable compositions is through air or flame blowing or mechanical attenuation where the latter is most preferred. In the mechanical attenuation process of forming glass fibers, which process is known to those skilled in the art, the direct melt or indirect melt method can be used. An example of a mechanical attenuation process is that of U.S. Patent Nos. 2,133,238 and 4,088,469 in Figure 1 and the description thereof, all hereby incorporated by reference. An example of the formation of bead shapes is by the process disclosed in U.S. Patent 3,843,341, hereby incorporated by reference.

After the shapes have cooled a sufficient degree to permit application of the phosphorus-containing compound by any method as described infra, the glass shape is treated with the phosphorus-containing compound to provide a film or coating on the surface of the shape. The phosphorus-containing compound applied to the shape is a monomeric, polymeric or mixture thereof organo phosphorus compound, and/or monomeric inorganic-organic coupling agent or monomeric vapor disposable phosphorus-containing compound. These compounds, when applied to the glass shape, are mechanically and/or chemically associated with the glass so that the phosphorus-containing compound is not water soluble to too great an extent.

One nonexclusive example of phosphorus-containing compound is condensation polymers involves reactants such as methylol phosphorus monomeric species reacted with ammonia to form a suitable nitrogen, methylol-phosphorus polymer. The methylol-phosphorus compounds can be those like tetrakis (hydroxy methyl) phosphonium chloride and tris (hydroxy methyl) phosphine oxide, hereinafter referred to as "THPC" and "THPO" respectively. The derivatives having phosphorus linked methylol groups are produced by reacting the THPC or THPO or mixture thereof with at least one other compound to form a product containing at least two $PCH_2OH$ groups in which the phosphorus atoms are members of phosphorus radicals of the group, trimethylene phosphine oxide, $(-CH_2)_3PO$ and tetramethylene phosphonium chloride, $-(CH_2)_4P^+Cl$. In addition to the ammonia as a reacting monomer, other nitrogen compounds can be used such as those having at least two members of the group hydrogen atoms and

methylol radicals attached to a trivalent nitrogen atom. For example. melamine or a water soluble methylol melamine; a polyamine such as hexamethylene pentamine; a primary or secondary aliphatic, alicyclic or aromatic amine, such as cetyl amine, cyclohexyl amine, aniline or diethanol amine; acyclic imine compound such as ethylene imine or polyethylene imine; a plurality of nitrogen compounds such as a water soluble methylol melamine and urea, or a water soluble methylol melamine and a primary or secondary amine; a polypeptide such as poly(hexamethylene adipamide) or a protein; at least phenolic compounds such as phenol. a napthol or an aromatic compound containing a plurality of hydroxyl groups attached to aromatic rings; a plurality of phosphorus linked methylol group reactive compounds, for example, at least one phenol compound and at least one nitrogen compound and the like, cyandiamide and dicyandiamide. Also the polymer can have a built-in textile softening agent comprising a polymer of a mixture of THPC and THPO with a long chain aliphatic primary amine such as cetyl amine. When ammonia is used, it is useable in a number of different ways. A few include: in a gaseous form as ammonium hydroxide, a solution of ammonia in an inert solvent, and as ammonia released in situ by the reaction of a compound capable of releasing ammonia such as an ammonium salt of a weak acid. Generally, these polymers are cross-linked phosphorus and nitrogen-containing polymers with recurring structural units each containing a phosphorus atom that is a component of a radical of the group of tetramethylene phosphonium chloride and trimethylene phosphine oxide that are linked to trivalent nitrogen atoms by at least methylene ($CH_2$) or methylene ether ($CH_2OCH_2$) structures. Such polymers can be produced in the form of solid synthetic resin or as polymers in aqueous solutions. These types of polymers generally can be formed by any method known to those skilled in the art such as those disclosed in U.S. Patent 2,809,941 (Reeves et al.) and U.S. Patent 2,772,188, both hereby incorporated by reference.

Another example of a suitable phosphorus-containing compound includes condensation polymers formed as a water-soluble phosphorus containing condensation polymer formed by heating a THP compound under reduced pressure and acid conditions to condense it by dehydration and deformaldehydation reactions. Also a water-soluble condensation product can be obtained by condensing a THP compound in a nonaqueous solution like an inert organic solvent at a temperature of around 100 to 150°C. In producing the water-soluble condensation products by heat condensing a THP compound with an amino group-containing compound such as urea or dicyandiamide under ordinary pressure the molar ratio of the reactants is usually about 1 mole of the THP compound and 0.02 to about 0.2 mole of an amino group containing compound. The condensation reaction is conducted at a temperature of around 40 to 120°C in an aqueous or organic solvent system or even in a melted state. Also phosphorus-containing condensation polymers known to those skilled in the art having a controlled molar ratio of the phosphorus methylene phosphorus ($P\text{-}CH_2\text{-}P$) linkage and/or phosphorus methylene ether linkage ($P\text{-}CH_2OCH_2\text{-}P$) are useful. These are produced by heating the phosphorus containing reactants under reduced pressure under acid conditions in a melted state or by heating the THP compound in an acid environment at high temperature in a melted state under reduced pressure. In these latter types of phosphorus containing polymers, the content of phosphorus per repeating structural unit of the resulting condensation product is 25.4 percent with a methylene ether type condensation product and 33.7 percent of the methylene type condensation product. For these reactions, the THP compounds that can be used are exemplified by: THPC, tetrakis-(hydroxymethyl phosphonium bromide), tetrakis (hydroxymethyl) phosphonium phosphate, tetrakis (hydroxylmethyl) phosphonium acetate, tetrakis (hydroxymethyl) phosphonium sulfate, tetrakis hydroxymethyl phosphonium oxalate, etc. And examples of the amino group containing compounds include, N-alkyl melamines, formoguanamine, acetoguanamine, benzoguanamine, thiourea and urea and their derivatives such as: N alkyl ureas, N aryl ureas, cyclic ureas such as: ethylene urea, propylene urea, trizone, urone, 4,5 dihydroxyethylene urea, and cyanamides, guanadine, guanalurea, alkyl carbamate, aliphatic amides, aromatic amides, biuret, alkylene diamine and the like. Generally, the molar ratios can run from around 0.1 to 1 and up to 2:1.

Another example of phosphorus-containing compound is a condensation polymer formed by reactions of an aldehyde-donating compound with an alkylanol amine, amine and/or urea compound and phosphoric acid. The aldehyde-donating compound can be aldehydes such as: formaldehyde, acetaldehyde, paraldehyde, glyoxal, or other mono-, di-or polyadehydes and any substance yielding or acting as an aldehyde such as the hydroxylated and/or methylolated THP compounds. When the aldehyde is formaldehyde or any aldehyde generating formaldehyde, methods known by those skilled in the art to reduce the amount of free formaldehyde in the composition can be employed. The alkynolamine generally can have 1 to 4 carbon atoms in the alkyl group such as the triethanolamine. Also ammonium phosphate and ammonium sulfate can be used as buffering materials, and the phosphoric acid that can be used can be the commercially available 85 percent aqueous solutions of phosphoric acid. Generally, these types of materials are formed by placing the buffer into water in a stirred tank with the addition of the alkynolamine. While in a separate

vessel, the phosphoric acid and formaldehyde can be combined and then added to the water solution. The phosphoric acid and formaldehyde mixture undergoes an exothermic reaction which requires continuous stirring. In addition, urea or melamine can be reacted with the phosphorus and formaldehyde.

Another type of phosphorus-containing compound is a polymer formed from a flame retardant acid or salt hetero-atom containing compound with a hydroxyl-containing and/or methylol-containing quaternary phosphonium, nitrogen-containing condensate prepolymer. The molar ratio of the former to the latter is in the range of about 1:1 to around 4:1. The flame retardant acid or salt is selected from phosphoric acid, diammonium hydrogen phosphate, boric acid, hydrogen bromide and the like. By the term "phosphoric acid", it is meant to include all the "oxy-acids" of phosphorus such as: hypophosphorus ($H_2PO_2$), phosphoric ($H_3PO_4$), phosphorus ($H_3PO_3$), pyrophosphoric ($H_4P_2O_7$), metophosphoric ($(H_3PO_3)_3$, poly-phosphoric, and any of these esterified acids, provided at least one free acidic functionality is present. The condensate prepolymer is formed from tetrakishydroxymethyl phosphonium salts like tetrakishydroxymethyl phosphonium sulfate or tetrakishydroxymethyl phosphonium chloride and nitrogen-containing compound having at least two active hydrogens and/or methylol radicals attached to a trivalent nitrogen. Examples of these compounds are like those aforementioned for other phosphorus containing polymers. The mole ratio of the former to the latter is at least 1:1 to around 1:3., and the reaction is conducted at an effective pH, temperature and residence time to favor the formation of a methylene bridge linkages between the reactants rather than ether linkages. The curable polymeric reaction products of the aforementioned phosphorus-containing compounds are formed in an aqueous medium or by any other method known to those skilled in the art such as formation of powders. In the aqueous solution, the solids content of the curable reaction product can range up to around 95 weight percent. Also the condensate prepolymer is formed in an aqueous medium or in any other medium known to those skilled in the art.

Generally all of the phosphorus-containing condensate polymers are reacted in such a manner to provide active hydroxyl-and/or methylol groups and the molecular weight of the polymers can vary depending on the types of polymers used. Preferably, the polymers are water soluble to efficiently utilize the presence of any phosphoric acid by capturing the water soluble acid in the cured polymer.

Additionally, any of the phosphorus-containing condensate polymers can be reacted in such a manner to provide active hydroxyl-and/or methylol groups for further reaction with hydrolyzable nucleophilic organo-functional silanes having an organic moiety with active hydrogens. These silanes contain at least 1, and as many as 3, hydrolyzable groups that are bonded to the silicon atom. Typical hydrolyzable groups include alkoxy of 1 to about 4 carbon atoms and alkoxy alkoxy containing up to 6 carbon atoms, halogens such as chlorine, fluorine and bromine, acryloxy of 2 to about 4 carbon atoms, phenoxy and oxime. Typical examples of the organo functional groups include methacryloxy, primary amino, beta-amino ethyl amino, glycidyl, epoxy cyclohexyl, mercapto, ureido, and polyazamide, N-phenyl-amino functional silanes, and carbamate functional silanes, and isocyanato functional silanes. The organo-functional silane can be mixed or interacted with the phosphorus-containing film former in the unhydrolyzed or hydrolyzed state. When the silane contacts a substrate, the silane is usually supplied as the hydrolyzed form. The hydrolysate is formed in the presence of a hydrolyzing agent such as a dilute acetic acid or sodium hydroxide solution. Generally, the silane has the formula:

$R\text{-}Si\ X_n\ R'_{3-n}$

wherein X is a hydrolyzable group and R′ is hydrogen or alkyl having up to 4 carbon atoms, and
n is an integer having a value from 1 to 3 and preferably 3, and
R is the organic radical as listed above.

The preferred hydrolyzable silane is the ureido-functional alkoxy silane. The amount of the silane is an effective amount to provide up to enough silane to have one silane compound for every hydroxyl and/or methylol moiety in the phosphorus-containing film former.

The phosphorus-containing film former and hydrolyzable nucleophilic organofunctional silane can be utilized together in an aqueous mixture or as an interaction product. In a mixture, the amount of film former is sufficient to provide an effective flame retardatnt amount and the amount of silane is an effective amount for providing up to 1 silane compound for each reactive hydroxyl-and/or methylol group on the polymer. The mixture is formed by combining the polymer and silane in the presence of a solvent, preferably water which can also contain latent curing agents which are initiated by heat or chemical reaction.

The interaction product of the polymer and silane occurs by copolymerization or by chain extension. The conditions for the interaction are generally a temperature in the range of greater than the freezing point of the reaction mixture to around 50°C atmospheric pressure depending on the reactivities of the reactants, although other equivalent conditions can be used. Preferably, the formation of the interaction product is by chain extension. When the interaction product is formed by copolymerization, the silane is added to the monomers used to prepare the phosphorus-containing condensation polymer. For instance, the ureido

functional silane coupling agent can be combined with the THP compound and urea in forming a phosphorus-containing silane-containing copolymer. Preferably, the pH conditions of the interaction formation should not be too low to cause hydrolysis of the hydrolyzable groups of the silane. When the reactive organo functional silane is used as a copolymer with the other phosphorus-containing polymer reactants, the amount of the silane should not be too great to produce a substantial quantity of monovalent species that would retard the polymerization reaction. Generally, the grafting of the reactive organo functional silane occurs at the hydroxyl groups of the phosphorus-containing condensation polymer. Grafting can be affected by a direct reaction wherein the reactive group of the reactive organo functional silane is one which is coreactive with the hydroxyl group on the aldehyde or the THP compounds used to form the condensation polymer. For instance, the ureido functional silane such as gamma ureido propyl triethoxy silane can be reacted with the hydroxyl functional condensation polymer or THP monomer or aldehyde monomer. Also an isocyanato propyl triethoxy silane can be reacted with the hydroxyl functional polymer or monomers. While such a reaction can be carried out in the absence of a solvent by maintaining the hydroxyl functional condensate polymer or monomers in a melt stage during the reaction, a solvent is preferably employed. The solvent is of the type where the materials are soluble in the solvent while the solvent is inert to the reactants. Those skilled in the art would recognize such solvents which are suitable; however, one can mention several nonexclusive examples such as acetone, methyl ethyl ketone and the like. The solvent can be employed at a concentration of up to 95 weight percent preferably from around 50 weight percent to 90 weight percent. The reaction time can vary from a few hours to around 24 hours depending on catalysis, temperature, etc. Typically, the reaction can be carried to completion in 4 to 5 hours using an appropriate catalyst and temperature.

Alternatively, the interaction polymer of the present invention can result from reaction of the phosphorus-containing reactive hydroxyl functional condensation polymer by direct grafting reaction with an oxirane functional organo silane such as glycidoxy propyltrimethoxy silane or beta-(3,4-epoxycyclohexyl) ethyl trimethoxy silane. The grafting reaction may occur through the hydroxyl-functional moieties or amide moieties of the phosphorus-containing condensation polymer. Other methods of grafting organo functional silane groups onto the polymer backbone involve first reacting a difunctional organic compound with the hydroxyl-functional phosphorus-containing condensation polymer or with an organo functional silane having active hydrogens on the organic moiety containing silicon-bonded hydrolyzable groups thereon to form a monofunctional intermediate which is subsequently reaction with the reactive organofunctional silane or the hydroxyl-functional phosphorus-containing condensation polymer. The difunctional organic compound can be any one in which at least one of the functional groups is coreactive the the hydroxyl groups of the condensation polymer, at least one of the functional groups is coreactive with the active hydrogen of the organic moiety of the organofunctional silane, and the remaining segment is an essentially inert moiety. For purposes of defining the difunctional organic compound, an ethylenically unsaturated site capable of undergoing reaction with the organo functional group of the reactive organo functional silane is considered a functional group. Typically the difunctional organic compound is an organic diisocyanate by employing an organic diisocyanate in this manner a number of reactive organo functional silanes which are widely commercially available but which are not directly coreactive with the hydroxyl-functional phosphorus-containing condensation polymer can thereby be conveniently grafted onto the condensation polymer backbone.

Another type of phosphorus-containing compound useful in the present invention is the phosphorus-containing inorganic or organic silane coupling agents. Nonexclusive examples of these compounds include those having the following formulas:

$$RxR'ySi\left[-CH_2-\overset{Sz}{\overset{\|}{P}}\,(A)\ (B)\right]_{4-(x+y)}\qquad \text{Formula 1}$$

wherein R and R′ are monovalent hydrocarbon radicals of hydrogen, carbon and oxygen atoms or the latter can alternatively be composed of at least two carbon atoms and A is a hydrogen atom or a monovalent hydrocarbon radical and B is a monovalent hydrocarbon radical and z is an integer of 0 or 1 and x is an integer of 0, 1 or 2 and y is an integer of 0 or 1 and the sum of (x + y) is an integer from 0 to 3; and/or

$$(RO)_2-\overset{O}{\overset{\|}{P}}-(A_x-B_y)_n-A_2-\overset{R_i}{\overset{|}{Si}}\ (OR)_{3-i}$$

wherein R is independently a substituted or unsubstituted aliphatic radical, and each A is a bivalent alkylene or arylene radical or a bivalent oxyalkylene or oxyarylene radcial jointed by its oxygen to the phosphorus

atom and x, n and z and i are integers each of values of 0 or 1, and B is either a bivalent oxygen radical or -NH radical, an -NR-radical, an -NHR-radical or an -S-radical when z is equal to 1 and n is equal to 1 to 20.

Any method known to those skilled in the art is used to produce the aforementioned phosphorus-containing silane coupling agent. For instance, the method of British patent specification 1,179,242 published January 28, 1970 by applicant, Midland Silicones Limited, teaches the production of the silane of Formula 1. For the production of the latter type of silane coupling agent, the method disclosed in U.S. Patent 3,122,581 can be used. Other types of useful sialne coupling agents are disclosed in U.S. Patent 3,122,581. The disclosures of U.S. Patents 3,122,581; 3,869,340 and British patent specification 1,179,242 for the compounds and their method of production are hereby incorporated by reference. Another useful phosphorus-containing silane is 2-(diphenylphosphorus) ethyltriethoxy silane available from Petrarch Systems, Inc., Bristol, Pennsylvania. Other useful compounds include: methyl-(3-(diphenylphosphinyl)-alkyl) dialkoxysilane; dialkylphosphonic-acid alkyltrialkoxy silane and the like.

Another useful type of phosphorus-containing silane coupling agent is that produced from tetrakishydroxyphosphonium salts and organofunctional silanes wherein the organic functionality has one or more active hydrogens. The phosphonium salts are like those described above for the phosphrous-containing condensates and polymers. The organo silane is like those described above for silylating the phosphorus-containing polymer.

An additional type of phosphorus-containing compound useful in the present invention is the phosphorus compounds that can be applied to a substrate through vapor deposition techniques such as vacuum deposition for applying thin films to substrate. The vapor may be derived by boiling a liquid, subliming a solid or passing a gas through a liquid. In general, the phosphorus-containing compound can be applied to the glass substrate by any of the known film deposition techniques known in the art. Examples of phosphorus compounds that can be used in the vapor deposition techniques are phosphorus halides such as phosphorus trichloride, which has a boiling point of 74.2°C, phosphorus pentachloride, which sublimes at a pressure of 760 mm mercury at 162.8°C, phosphorus oxychloride and some phosphorus oxides like phosphorus pentoxide and the like.

Generally, the method of applying the phosphorus-containing compound to the glass depends on the shape of the glass and also the type of phosphorus-containing compound utilized.

Not wishing to be bound by any particular theory, it is Applicants' belief that the heat or temperature resistant glass product is produced from a change in the phosphorus-containing compound when the glass is heated above its usual softening point. The various phosphorus-containing compounds placed on the surface of the glass usually have a lower melting or boiling point than the melting point of the glass substrate. Hence, not only is the softening point of the phosphorus coated glass article higher than the glass article itself, but the phosphorus does not volatilize at its usual temperature reached before the usual softening temperature of the glass substrate. It is believed that a possible interaction or interbonding occurs that might limit the volatilization. As the temperature increases much further beyond the usual softening point of the glass, any interaction or interbonding may weaken. Hence, the phosphorus or phosphorus-containing compounds are not added to the glass compositions in order to lower the melting point of the glass composition, but are added to the surface of glass to increase the melting point of the glass. For instance, phosphrous trichloride has a boiling point of 74.2°C and phosphorus pentachloride sublimes at a pressure of 760 mm mercury at 162.8°C.

## Preferred Embodiment

Glass fibers of an "E-glass" or "621-glass" composition are formed from a direct melt operation as the glass shapes. The fibers issue forth from small orifices in a bushing which contains the melted glass from a furnace. The batch raw materials can be back calculated to provide the proper ratio of oxides to produce the fiberizable glass composition. As the fibers cool, the phosphorus-containing compounds can be added as a sizing composition or typical sizing compositions can be added and later removed with the application of the phosphorus-containing compound as a secondary coating. The glass fibers with the phosphorus-containing coating or traditional sizing composition having one or more film formers, silane coupling agents and/or lubricants are wound into a package of superimposed annular layers.

In a secondary coating composition, the traditional sizing composition could be removed by solvents or heat cleaning and the phosphorus-containing compound added by any film deposition technique known to those skilled in the art. It is preferred to add the phosphorus-containing compound as the sizing composition along with any traditional sizing components such as silane coupling agents, and lubricants in an amount to assure a continuous coating greater than a molecular monolayer of the phosphorus-containing

compound.

The preferred phosphorus-containing compound is prepared as a condensate. This involves the reaction of tetrakis (hydroxymethyl) phosphonium sulfate as Retardol S available as a 70-75 percent solids aqueous solution and urea in a molar ratio in the range of 1:1 to 1:1.7 in the presence of a tertiary amine such as triethanolamine. The amount of the tertiary amine is sufficient to give a pH for the reactants in water in the range of about 5 to about 7. After the reactants are dissolved in water and the base is added, a catalyst such as diammonium phosphate is added in sufficient amounts to begin the reaction at ambient temperatures. The reaction is conducted for a period of time ranging from about 0.5 to 24 hours without the removal of water to produce an aqueous solution of low molecular weight prepolymer. After this preparation of the prepolymer. phosphoric acid is added to the aqueous solution in an amount to give a molar ratio of the phosphoric acid to the prepolymer condensate of 1:1 up to about 4:1 respectively. Addition of phosphoric acid results in an exotherm that is controlled to under 100°C. This reaction is conducted for any length of time since the reaction is limited by the addition of a deficient amount of phosphoric acid to produce the curable polymeric reaction product. The resultant aqueous dispersion of polymeric product has a nonvolatile solids content in the range of about 75 to about 85 weight percent.

For curing of either the polymeric reaction product, the remaining amount of urea is added to provide a stochiometric amount of urea for the amount of THPS initially reacted to form the prepolymer condensate. This addition is conducted at ambient temperatures and the aqueous dispersion is stable for up to several months. This aqueous solution is applied as a sizing composition to glass fibers and cured at a temperature in the range of around 80 to around 150°C to drive off water and complete the reaction of the urea and the resinous reaction product. The resultant coating has good flexibility, hydrolytic stability and durability.

The invention and preferred embodiment and alternative embodiments will be further illustrated by the following, nonlimiting examples.

Example 1

A phosphorus-containing silane coupling agent, diethyl phosphato ethyl triethoxy silane having the formula $(C_2H_5O)_2$ P $(CH_2)_2$ -Si $(OC_2H_5)_3$ in an amount of 5 grams was added to 95 grams of water containing 3 drops of acetic acid to hydrolyze the silane. A piece of heat cleaned and finished glass fiber strand fabric was soaked in the solution for 48 hours and placed on a paper towel and dried and cured at 130°C for 4 hours. The treated glass fabric was placed in a muffle furnace for 15 minutes at 900°C along with a control sample. The control sample was heat cleaned glass fiber strand fabric having no phosphorus-containing compound. After heating at 900°C for 15 minutes, the samples were withdrawn from the muffle furnace and no melting was observed on the phosphorus-containing sample while the control sample melted into a ball.

Example 2

Fabric of glass fiber strands which was heat cleaned was refluxed with phosphorus trichloride for 4 hours and was allowed to sit in the phosphorus trichloride overnight. The glass fabric was removed and immersed in reagent ethyl alcohol then rinsed with water and dried and cured in an oven at 130°C for 1 hour. The phosphorus treated glass fabric was placed in a muffle furnace along with a sample of the control fabric for 15 minutes at 900°C. The control fabric melted into a ball and the phosphorus treated fabric had significant melting but not as extensive as the control.

Example 3

Tetrakishydroxymethyl phosphine oxide as Pyroset TPO, supplied from American Cyanamide as a 75% solids solution, in an amount of 14.2 grams was added to 86 grams of water. A heat treated glass fiber strand fabric as in Example 1 was dipped into the solution and picked up around 10% solid of the phosphonium salt. The treated fabric was cured at 50°C for 15 minutes and then at 1 hour for 130°C. Differential thermal analysis of the treated fabric showed an onset of melting at 985°C.

Example 4

Tetrakis hydroxymethyl phosphonium sulfate as Retardol S aqueous solution in an amount of 3070 grams (3.67 moles) was combined with urea in an amount of 538 grams (8.97 moles) and stirred until homogeneous. Triethanolamine in an amount of 314 grams (2.14 moles) and diammonium hydrogen phosphate in an amount of 5 grams were added to the mixture with continued stirring for 24 hours to produce a prepolymer condensate. Heat cleaned glass fiber strand fabric was dipped into a solution having 12.5 grams of the prepolymer condensate solution which was 80% solids and having 0.26 grams of urea in 43.44 grams of water. The treated fabric was cured at 50°C until nontacky, approximately 15 minutes, then at 120°C for 30 minutes. Differential thermal analysis of the fabric showed the onset of melting at 1031°C. Differential thermal analysis of a control sample of yarn available from PPG Industries, Inc. under the trade designation TEXO® 1.75 yarn had an onset of melting at 800°C.

Example 5

The prepolymer solution of Example 4 was combined with 985 grams of phosphoric acid (8.54 moles) with stirring until a clear pink solution was obtained. An amount of 12.5 grams of the polymer solution with 3 grams of urea were diluted with 84.5 grams of water. Heat-cleaned glass fiber strand fabric was dip coated to have a 10% pickup of the polymer. The treated fabric was cured at 50°C until nontacky, approximately 15 minutes, and then at 120°C for 30 minutes. Differential thermal analysis of the treated fabric showed the onset of melting at 1030°C.

Example 6

A round bottom flask was charged with 7568 grams of water and tetrakishydroxymethyl phosphonium sulfate (1726 grams, 3.19 mole) and heated to 70-75°C. Urea in an amount of 304 grams (5.07 mole) was added with stirring and 24 hours of continued heating. The solution was cooled to room temperature and urea in an amount of 76 grams and gamma-ureido triethoxy silane (A-1160) in an amount of 22 grams was added. The resin solution was applied to glass fiber strands as G-75 strands and cured 120°C for 8 hours. Differential thermal analysis is shown in Figure 2. The differential thermal analysis of a control sample to glass fiber strand (available from PPG Industries, Inc. under the trade designation G-75 6/0) is shown in Figure 1. The onset of melting for the control sample was around 800°C and the onset of melting for the prepolymer coated glass fiber strand was greater than 1,000°C.

Example 7

Standard glass fiber strand textile yarn from Burlington Industries was heat cleaned at conditions of 680°C for 40 minutes and cooled in a dessicator. The loss on ignition was 2.1%. The yarn was placed in a 3-necked flask containing 195 grams of toluene and 5 grams of diethyl phosphato ethyl triethoxy silane. The yarn in the presence of the aforementioned material was refluxed for 4 hours. A second sample was placed in a 3-necked flask containing the same solution and refluxed for 24 hours. After refluxing, both fabrics were placed in a vacuum oven for 15 minutes and dried until dry to the touch and then placed in an oven for 30 minutes at approximately 130°C. A control sample of the textile yarn from Burlington along with the two samples of phosphorus treated fabrics were placed in a muffle oven and heated to 900°C in 15 minutes at which time all of the samples melted. This shows there was no significant improvement in melting point when an amount of the phosphorus on the fabric was a molecular monolayer.

## Claims

1. A method of forming heat resistant glass shapes, comprising:

a. forming glass shapes from inorganic oxide glass forming materials having at least a minor amount of silica along with at least one nonrefractory metal oxide to reduce the melting point below that for silica,

b. treating the glass shapes at an effective treating temperature with at least one phosphorus-containing compound to form a coating on the glass in an amount greater than a molecular monolayer of the phosphorus compound to produce phosphorus treated glass shapes having a melting point greater than the melting point of the original glass shapes.

2. Method of Claim 1, wherein the glass system is selected from inorganic oxide systems consisting of: silicates with at least one nonrefractory modifying metal oxide, alkali metal and/or alkaline earth metal silicates, borosilicates, alumina silicates, alumina borosilicates, alkali metal alumina borosilicates, alkaline earth metal alumina borosilicates, alkali metal alkaline earth metal alumina borosilicates, soda lime silicates and any low or free boron and/or fluorine derivatives thereof.

3. Method of Claim 1, wherein the phosphorus-containing compounds are selected from the group consisting of tetrakis (hydroxymethyl) phosphonium salts, phosphorus-containing inorganic and organic coupling agents, vapor deposable phosphorus-containing compounds including phosphorus trichloride, phosphorus pentachloride and phosphorus oxychloride and phosphorus pentoxide, polymeric condensates of methylol containing compounds and compounds with active hydrogen and phosphoric acid, polymeric condensates of tetrakis (hydroxymethyl) phosphonium salts, polymeric condensates of tetrakis (hydroxymethyl) phosphonium salts and nitrogen containing compounds having active hydrogens with and without the addition of phosphoric acid to the condensates.

4. The method of claims 1 to 3, wherein the heat resistant glass shapes have a softening point greater than the glass shape itself by

a. forming glass shapes from an alkali metal alumina borosilicate quaternary system,

b) using tetrakis (hydroxymethyl)phosphonium salts, phosphorus-containing inorganic and organic coupling agents, vapor deposable phosphorus-containing compounds including phosphorus trichloride, phosphorus pentachloride and phosphorus oxychloride and phosphorus pentoxide, polymeric condensates of methylol containing compounds and compounds with active hydrogen and phosphoric acid, polymeric condensates of tetrakis (hydroxymethyl) phosphonium salts, polymeric condensates of tetrakis (hydroxymethyl) phosphonium salts and nitrogen containing compounds having active hydrogens with and without the addition of phosphoric acid to the condensates as phosphorus containing compound for the treating of the glass shapes to produce treated glass having a softening point greater than the original formed glass shapes by the interaction of the phosphorus with the glass surface and the formation of a ceramic-like coating.

5. Method of Claim 3, wherein the phosphorus-containing condensates are applied to the shapes and cured with a curing agent to form a coating, are phosphorus-containing, organic, inorganic coupling agents applied to the glass shapes and dried, are vapor deposable, phosphorus-containing compounds applied to the glass shapes by vapor deposition.

6. Method of Claims 1 to 5, wherein the amount of phosphorus-containing compound on the glass shapes is in the range of at least about 0.1 weight percent.

7. Method of Claims 1 to 6, wherein silica is the major glass forming oxide.

8. Method of Claims 1 to 7, wherein the glass is formed into shapes of fibers, strands, bundles of fibers and bundles of strands, yarn, woven and nonwoven fabrics, mats, capillaries, tubes, beads, plates, sheets, and flat glass.

9. The method of claim 8, wherein the shapes are heat resistant glass fibers prepared by

a. forming glass fibers of any dimension from alkali metal alkaline earth metal alumina borosilicate glass system by air blowing, flame blowing or mechanical attenuation,

b. treating the glass fibers upon sufficient cooling with the phosphorus-containing compound to form a coating on the glass in an amount greater than a molecular monolayer of the phosphorus compound to produce heat resistant glass fibers having softening points greater than the softening point of the untreated glass fiber.

10. Method of Claim 9, wherein the phosphorus-containing compounds are applied to the glass fibers as a sizing composition.

11. Method of Claim 9, wherein the phosphorus-containing compounds are applied to heat cleaned, glass fibers as a secondary coating.

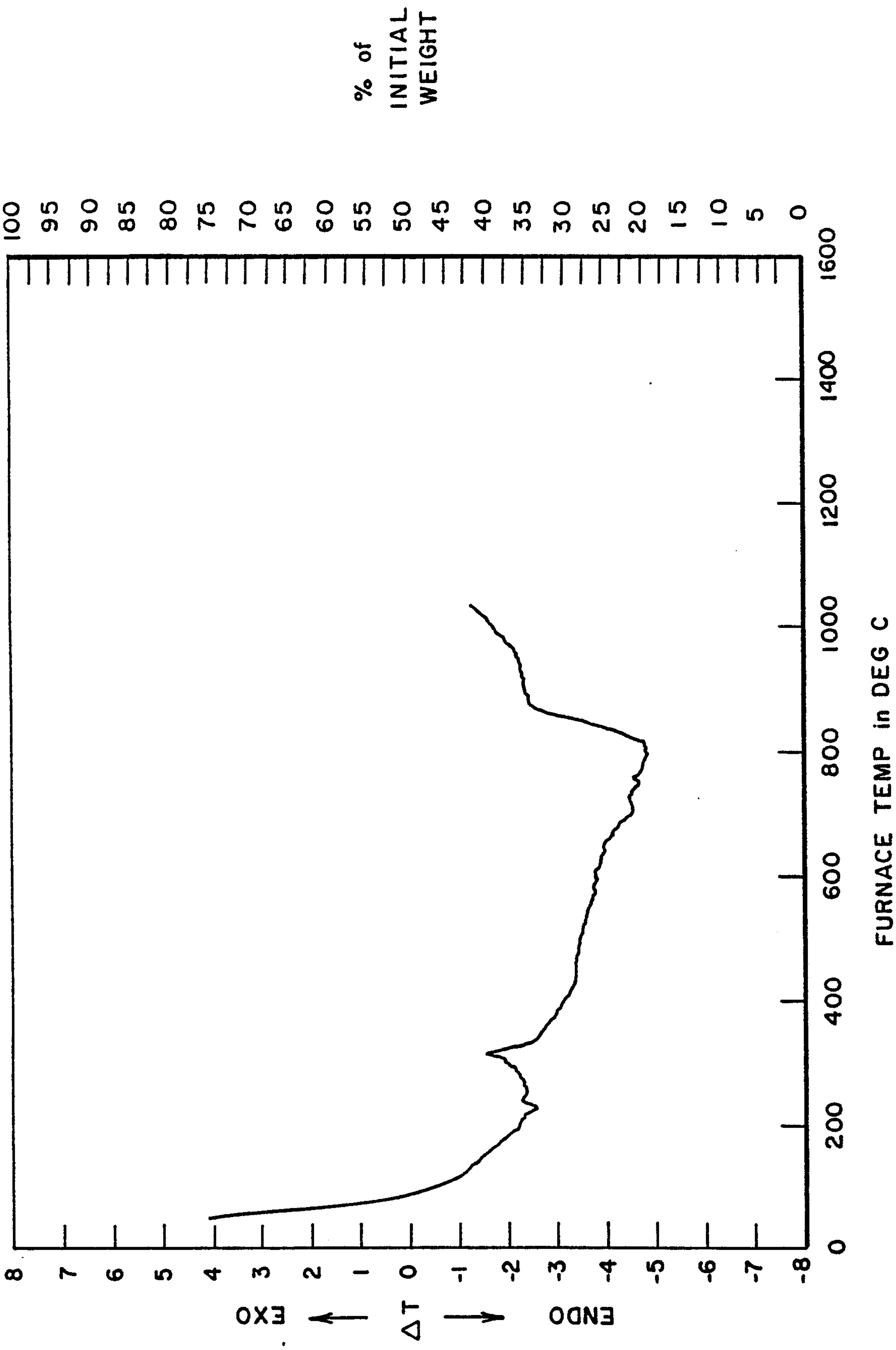

% of
INITIAL
WEIGHT
100 95 90 85 80 75 70 65 60 55 50 45 40 35 30 25 20 15 10 5 0
8 7 6 5 4 3 2 1 0 -1 -2 -3 -4 -5 -6 -7 -8
EXO
ΔT
ENDO
0 200 400 600 800 1000 1200 1400 1600
FURNACE TEMP in DEG C


FIG. 1

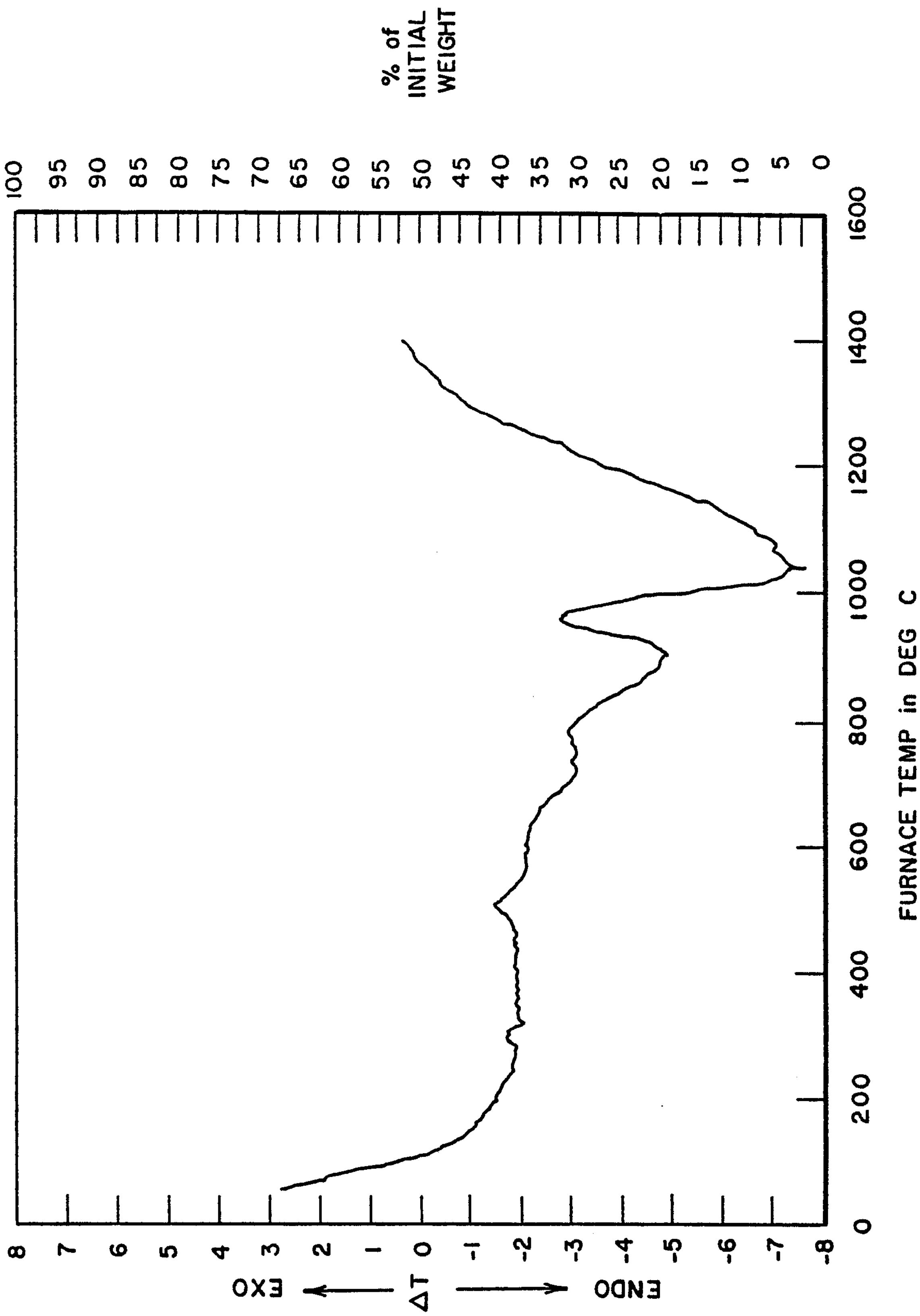
% of
INITIAL
WEIGHT
100
95
90
85
80
75
70
65
60
55
50
45
40
35
30
25
20
15
10
5
0
FURNACE TEMP in DEG C
0
200
400
600
800
1000
1200
1400
1600
EXO
ΔT
ENDO
8
7
6
5
4
3
2
1
0
-1
-2
-3
-4
-5
-6
-7
-8

FIG. 2

European Patent Office

# EUROPEAN SEARCH REPORT

Application Number

EP 88 10 4532

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 416 950 (M.E. SCHRADER)<br>* Example 1; claims; example 3 *<br>--- | 1-11 | C 03 C 25/02<br>C 03 C 17/22 |
| X | US-A-2 846 348 (A. MARZOCCHI)<br>* Claims; column 2, lines 11-20 *<br>--- | 1-4,6-11 | |
| X | FR-A-2 119 554 (GENERAL ELECTRIC COMPANY)<br>* Claims; page 8, line 36 - page 9, line 33 *<br>--- | 1-4,6-11 | |
| X | CHEMICAL ABSTRACTS, vol. 89, no. 18, 30th October 1978, page 278, abstract no. 151389x, Columbus, Ohio, US; & JP-A-78 52 791 (KANEBO LTD) 13-05-1978<br>* Whole abstract *<br>--- | 1-4,6-11 | |
| X | FR-A-1 471 692 (UNION CARBIDE)<br>* Claims; page 10, right-hand column, line 50 - page 11, left-hand column, line 29 *<br>----- | 1-4,6-11 | TECHNICAL FIELDS SEARCHED (Int. Cl.4)<br>C 03 C |

The present search report has been drawn up for all claims

| Place of search | Date of completion of the search | Examiner |
|---|---|---|
| THE HAGUE | 01-07-1988 | BOUTRUCHE J.P.E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document